# EUROPÄISCHE PATENTSCHRIFT

(11) **EP 2 854 257 B1**
(45) Veröffentlichungstag und Bekanntmachung des Hinweises auf die Patenterteilung: **27.12.2017**
(21) Anmeldenummer: 14178250.8
(22) Anmeldetag: 24.07.2014
(51) Int. Cl.: H02K 1/14, H02K 1/18

(54) **Statoranordnung für einen Elektromotor**
Stator assembly for an electric motor
Agencement de stator pour un moteur électrique

(30) Priorität: 27.09.2013 DE 102013219535
(43) Veröffentlichungstag der Anmeldung: 01.04.2015
(73) Patentinhaber: Mahle International GmbH, 70376 Stuttgart (DE)
(72) Erfinder: Helmis, Martin, 50825 Köln (DE); Krappel, Michael, 70378 Stuttgart (DE); Neubauer, Andreas, 71554 Weissach i.T. (DE); Fritz, Oliver, 72631 Aichtal (DE); Weber, Stephan, 70469 Stuttgart (DE)
(74) Vertreter: BRP Renaud & Partner mbB Rechtsanwälte Patentanwälte Steuerberater

(56) Entgegenhaltungen:
- EP-A2- 1 209 796
- EP-A2- 2 023 465
- WO-A1-2014/128938
- JP-A- H11 341 716
- JP-A- 2006 121 818
- US-A1- 2010 007 236

## Beschreibung

Die Erfindung betrifft eine Statoranordnung für einen Elektromotor sowie einen Elektromotor mit einer solchen Statoranordnung.

Herkömmliche Rotor- und Statoranordnungen für Elektromotoren mit aus mehreren Segmenten zusammengesetzten Statoren bzw. Rotoren sind aus dem Stand der Technik bekannt.

Die DE 10 2009 052 596 A1 offenbart einen Rotor für einen Elektromotor, der aus Einzelsegmenten gebildet ist, wobei jedes Einzelsegment ein erstes Teil aufweist, das in zusammengebautem Zustand mit einem zweiten korrespondierenden Teil des benachbarten Einzelsegmentes in Kontakt steht. Die beiden zueinander benachbarten Teile sind derart ausgebildet, dass sich ein Formschluss zwischen dem ersten Teil und dem zweiten Teil in radialer Richtung und in Umfangsrichtung ergibt. Durch den Formschluss in radialer Richtung und in Umfangsrichtung bildet sich eine selbsttragende Ringstruktur des zusammengebauten Rotors.

Die DE 100 37 410 A1 beschreibt einen Elektromotor mit einem Rotor und einem Stator, welche beide jeweils einteilig ausgebildet und aus jeweils einem Band gewickelt sind. Der Stator ist auf der nach innen weisenden Seite mit Schlitzen zur Aufnahme von elektrischen Wicklungen versehen; jeweils zwei aufeinander folgende Schlitze weisen den gleichen Abstand voneinander auf und sind durch einen Steg voneinander getrennt, dessen Fuß mit einem ringförmigen Joch verbunden ist und die Schlitze nach außen teilweise begrenzt.

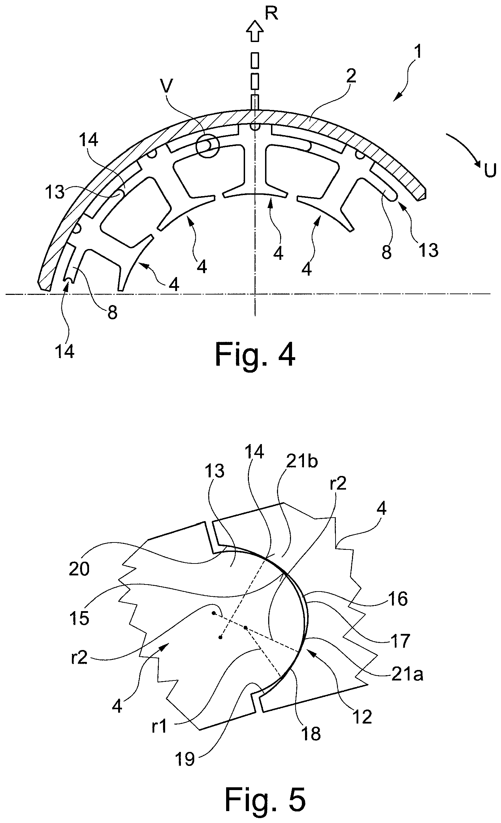

JPH11341716 beschreibt Spulenelementen zur Aufnahme einer jeweiligen Statorwicklung, wobei die Spulenelemente jeweils in einem im Statorgehäuse montierten Zustand wenigstens einen radial nach außen abstehenden Befestigungsvorsprung (F1, F2 auf Abbildung 5) aufweisen, mittels welchem sich die Spulenelemente derart radial nach außen am Statorgehäuse abstützen. Die Abbildung 11 und der Absatz [0047] beschreiben Spulenelemente, wobei die Ausnehmung 18A und der Vorsprung 17A Oberflächenkonturen mit zwei unterschiedlichen Krümmungsradien (r1 , r2) aufweisen.

Die vorliegende Erfindung beschäftigt sich mit dem Problem, bei der Herstellung von Statoranordnungen für Elektromotoren neue Wege aufzuzeigen.

Dieses Problem wird durch den Gegenstand der unabhängigen Patentansprüche gelöst. Bevorzugte Ausführungsformen sind Gegenstand der abhängigen Patentansprüche.

Die Erfindung beruht auf dem allgemeinen Gedanken, eine ein ringartig ausgebildetes Statorgehäuse aufweisende Statoranordnung mit einer Mehrzahl von im Statorgehäuse benachbart zueinander angeordneten Spulenelemente zu versehen, wobei die Spulenelemente jeweils einen radial nach außen abstehenden und kurvenartig wirkenden Befestigungsvorsprung aufweisen, mittels welchem sich die Spulenelemente derart am Statorgehäuse abstützen, dass zwischen diesen und den Spulenelementen ein sich in Umfangsrichtung des Statorgehäuses erstreckender Zwischenraum ausgebildet wird. In diesem Zwischenraum können nach einer Montage der Spulenelemente auf vorteilhafte Weise elektrische Leitungsbauteile wie zum Beispiel elektrische Leitungsstränge o.ä. untergebracht werden, welche es gestatten, auf den Spulenelementen vorgesehene Statorwicklungen elektrisch nach außen zu führen. Die radial nach außen vorstehenden Befestigungsvorsprünge erlauben beim Einpressen des Stators in das Statorgehäuse zudem ein Eingraben der Befestigungsvorsprünge in das Statorgehäuse, wodurch die Spulenelemente fest im Statorgehäuse verankert sind. Zudem kann durch die Befestigungsabschnitte ein dazwischen liegender Zwischenraum geschaffen werden, der für andere Aufgaben nutzbar ist. Die radial nach außen vorstehenden Befestigungsvorsprünge erlauben somit eine einfache und dennoch mechanisch stabile Befestigung der Spulenelemente, vorzugsweise mittels Einpressen, am Statorgehäuse durch Verwendung eines geeigneten Einpresswerkzeugs. Aufgrund des zwischen den Spulenelementen und dem Statorgehäuse vorgesehenen Zwischenraums weist die Statoranordnung gegenüber herkömmlichen Statoranordnungen ein reduziertes Gewicht auf.

Bei einer bevorzugten Ausführungsform können die Spulenelemente im am Statorgehäuse montierten Zustand mittels der radial nach außen abstehenden Befestigungsvorsprünge in das Statorgehäuse eingepresst sein. Zur Montage der Spulenelemente können diese, wie im Folgenden noch genauer erläutert wird, zunächst kettenartig aneinander befestigt werden und dann mittels eines geeigneten Einpresswerkzeugs als Einheit in das Statorgehäuse eingepresst werden.

Besonders zweckmäßig wird der Zwischenraum mittels der Befestigungsvorsprünge in eine Mehrzahl von ringsegmentartig ausgebildeten Teil-Zwischenräumen unterteilt. Dies stehen zur Unterbringung von elektrischen Leitungen zur Verfügung, mittels welcher die auf den einzelnen Spulenelementen angebrachten Statorwicklungen elektrisch kontaktiert werden können. Je nach Ausgestaltung der radial nach außen abstehenden Vorsprünge sind für die Teil-Zwischenräume verschiedene Geometrien vorstellbar.

Bei einer vorteilhaften Weiterbildung ist in jedem Befestigungsvorsprung radial außen eine sich in axialer Richtung des Statorgehäuses erstreckende Ausnehmung, insbesondere in der Art einer Nut, vorgesehen. Dies ermöglicht ein besonders einfaches Einpressen der Befestigungsvorsprünge in das Statorgehäuse, da mittels der Ausnehmung die Kontaktfläche beim Einpressen des jeweiligen Spulenelemente in das Statorgehäuse reduziert und folglich der vom Befestigungsvorsprung erzeugte Anpressdruck auf das Statorgehäuse erhöht werden kann.

Bei einer besonders vorteilhaften Ausführungsform weist jedes Spulenelement einen sich im montierten Zustand entlang der radialen Richtung des Statorgehäuses erstreckenden Hauptabschnitt auf, auf welchem eine Statorwicklung angeordnet, insbesondere aufgewickelt, ist. Der Hauptabschnitt geht radial außen in einen beidseitig entlang der Umfangsrichtung vom Hauptabschnitt abstehenden äußeren Endabschnitt und radial innen in einen beidseitig entlang Umfangsrichtung vom Hauptabschnitt abstehenden inneren Endabschnitt über. Ein derartig ausgebildetes Spulenelement gestattet ein zuverlässiges Bewickeln der Spulenelemente mit einer jeweiligen Statorwicklung, wobei die beiden Endabschnitte zusätzlich als Polschuhe ausgebildet sein können, mittels welcher der Feldlinienverlauf des von den Spulenelementen erzeugten Stator-Magnetfelds verbessert werden kann. Zwischen Statorwicklung und dem Hauptabschnitt kann ein elektrisch isolierendes Material, beispielsweise in der Art einer elektrisch isolierenden Beschichtung.

Besonders bevorzugt können zwei in dem am Statorgehäuse befestigten Zustand benachbarte Spulenelemente jeweils mittels des radial äußeren Endabschnitts aneinander befestigt sein. Zur Befestigung zweier benachbarter Spulenelemente sind am radial äußeren Endabschnitt jeweils ein in Umfangsrichtung abstehender Vorsprung sowie eine entgegen der Umfangsrichtung offene und zum Vorsprung komplementäre Ausnehmung vorgesehen. In dem am Statorgehäuse befestigten Zustand greift der Vorsprung eines ersten Spulenelements in die jeweilige Ausnehmung eines in Umfangsrichtung zum ersten Spulenelement benachbarten zweiten Spulenelements ein oder umgekehrt. Dies ermöglicht eine stabile, kettenartige Montage der Spulenelemente aneinander, bevor diese dann ein einem weiteren Montageschritt als Einheit, beispielsweise mittels Einpressen, am Statorgehäuse befestigt werden.

Um eine mechanisch möglichst stabile Befestigung zweier benachbarter Spulenelemente aneinander zu erzielen, kann bei einer weiteren bevorzugten Ausführungsform der am radial äußeren Endabschnitt des jeweiligen Spulenelements vorgesehen Vorsprung im Querschnitt der Statoranordnung kreissegmentartig ausgebildet sein. Die jeweilige Ausnehmung ist dabei derart im Wesentlichen komplementär zum kreissegmentartigen Vorsprung ausgebildet, dass ein jeweiliger in einer Ausnehmung aufgenommener Vorsprung mit seiner Außenfläche nicht vollständig an einer zu dieser Außenfläche komplementären Außenfläche der Ausnehmung anliegt.

Besonders zweckmäßig kann in einem aneinander befestigten Zustand zweier benachbarter Spulenelemente wenigstens ein Zwischenraum zwischen einem Nutengrund der Ausnehmung und dem Vorsprung ausgebildet sein.

Vorteilhafterweise kann der Vorsprung im Querschnitt eine kreissegmentartige, insbesondere eine halbkreisartige, Oberflächenkontur mit einem vorbestimmten ersten Krümmungsradius aufweisen. Entsprechend weist die Ausnehmung im Querschnitt eine erste kreissegmentartige Oberflächenkontur auf, welches im Nutengrund in eine zweite kreissegmentartige Oberflächenübergeht, wobei die beiden Oberflächenkonturen jeweils einen zweiten Krümmungsradius aufweisen, der größer ist als der erste Krümmungsradius. Auf diese Weise kann der vorangehend vorgeschlagene Zwischenraum zwischen dem Nutengrund der Ausnehmung und dem zur Ausnehmung komplementären Vorsprung erzeugt werden.

Bei einer besonders zweckmäßigen Ausführungsform können die Spulenelemente als Blechstanzteile ausgebildet sein, was eine besonders kostengünstige Herstellung der Spulenelemente erlaubt. Zweckmäßigerweise ist auch das Statorgehäuse aus einem Metall, vorzugsweise Aluminium, hergestellt, was ein Einpressen der Blechstanzteile (Spulenelemente) sowie ein Eingraben derselben in das Statorgehäuse erleichtert.

Die Erfindung betrifft des Weiteren einen Elektromotor mit einer Statoranordnung mit einem oder mehreren der vorangehend genannten Merkmale sowie mit einem relativ zur Statoranordnung drehverstellbaren Rotor.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine grobschematische Teilansicht einer erfindungsgemäßen Statoranordnung,
- Fig. 2a: eine Detailansicht eines Spulenelements der Statoranordnung,
- Fig. 2b: eine Variante des Spulenelements der Figur 2a,
- Fig. 3: eine alternative Darstellung der Statoranordnung der Figur 1 mit bewickelten Spulenelementen,
- Fig. 4: eine weitere alternative Darstellung der Statoranordnung der Figur 1, in welcher gezeigt ist, wie benachbarte Spulenelemente aneinander befestigt sind,
- Fig. 5: eine Detailansicht der Figur 4, in welcher zwei benachbarte und aneinander befestigte Spulenelemente gezeigt sind.

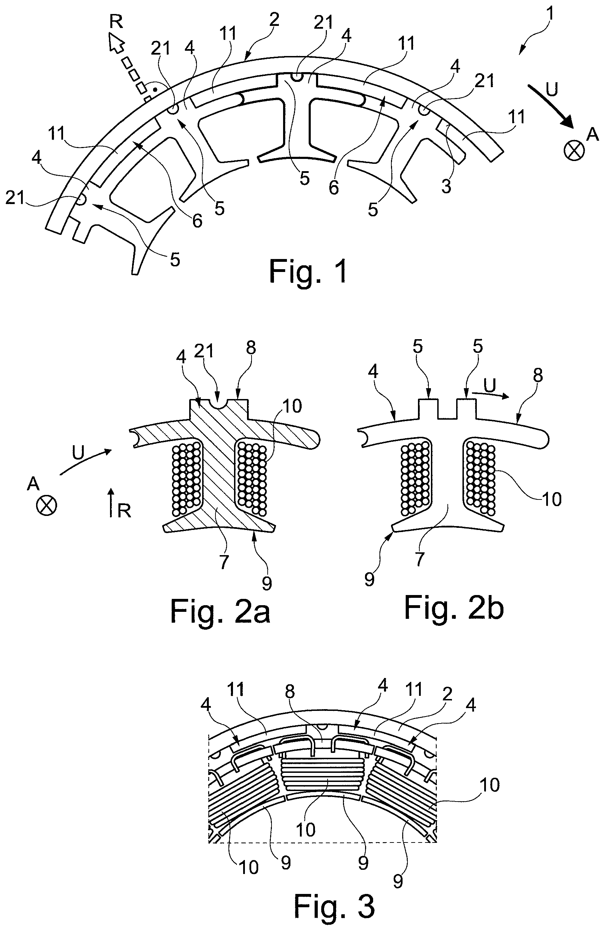

In der Figur 1 ist ein Ausschnitt einer erfindungsgemäßen Statoranordnung für einen Elektromotor grobschematisch im Querschnitt dargestellt und mit 1 bezeichnet. Die Statoranordnung 1 umfasst ein im Querschnitt ringartig ausgebildetes Statorgehäuse 2 sowie eine Mehrzahl von in einem Statorgehäuse 3 benachbart zueinander angeordneten Spulenelementen 4. Das gesamte Statorgehäuse 3 kann in der Art eines Zylinders ausgebildet sein und aus einem Metall, vorzugsweise Aluminium, hergestellt sein, was ein Einpressen der als Blechstanzteile ausgebildeten Spulenelemente 4 in das Statorgehäuse 3 erleichtert, wenn diese am Statorgehäuse 3 befestigt werden sollen. Die Spulenelemente 4 sind entlang der Umfangsrichtung U des Statorgehäuses 2 benachbart zueinander in diesem angeordnet und weisen jeweils einen radial nach außen abstehenden Befestigungsvorsprung 5 auf, mittels welchem sie sich in einem am Statorgehäuse 2 befestigten Zustand an diesem abstützen bzw. in dieses eingraben.

In der Figur 2a ist nun ein Spulenelement 4 in einer separaten, vergrößerten Darstellung gezeigt. Das Spulenelement 4 weist einen sich im montierten Zustand entlang einer radialen Richtung R des Statorgehäuses 2 erstreckenden Hauptabschnitt 7 auf, auf welchem eine Statorwicklung 10 aufgewickelt ist. Der Hauptabschnitt 7 geht radial außen in einen beidseitig entlang der Umfangsrichtung U abstehenden äußeren Endabschnitt 8 und radial innen in einen beidseitig entlang der Umfangsrichtung U abstehenden inneren Endabschnitt 9 über. Die Begriffe "radial innen" und "radial" außen beziehen sich dabei auf einen am Statorgehäuse 2 montierten Zustand der Spulenelemente 4. Die Figur 3 zeigt in einer Teilansicht exemplarisch drei mit einer jeweiligen Statorwicklung 10 bewickelte und am Statorgehäuse 2 montierte Spulenelemente 4. Ein derartig ausgebildetes Spulenelement 4 (vgl. hierzu wieder Fig. 2a) gestattet ein einfaches Bewickeln mit einer jeweiligen Statorwicklung 10 vor der Montage der Spulenelemente 4 am Statorgehäuse 2. Die beiden Endabschnitte 8, 9 können zusätzlich als magnetische Polschuhe ausgebildet sein, mittels welcher der Feldlinienverlauf des von den Spulenelementen 4 erzeugten Stator-Magnetfelds verbessert werden kann. Zwischen Statorwicklung 10 und dem Hauptabschnitt 7 kann ein elektrisch isolierendes Material, beispielsweise in der Art einer elektrisch isolierenden Beschichtung, angebracht werden.

Betrachtet man nun wieder die Darstellung der Figur 1, so erkennt man, dass mittels der Befestigungsvorsprünge 5 zwischen den Spulenelementen 4 und dem Statorgehäuse 2 ein sich in Umfangsrichtung U des Statorgehäuses 2 erstreckender Zwischenraum 6 ausgebildet wird. Mittels der radial nach außen vorstehenden Befestigungsvorsprünge 5 können die Spulenelemente 4 auf einfache und dennoch mechanisch stabile Weise, vorzugsweise mittels Einpressen, am Statorgehäuse 2 fixiert werden. Zur Montage werden die Spulenelemente 4 zunächst kettenartig aneinander befestigt und anschließend mittels eines Einpresswerkzeugs als Einheit in das Statorgehäuse 2 eingepresst. Dabei erlauben die Befestigungsvorsprünge 5 eine komfortable Durchführung des Einpressvorgangs.

Aufgrund des zwischen den Spulenelementen 4 und dem Statorgehäuse 2 vorgesehenen Zwischenraums 6 weist die Statoranordnung 1 gegenüber herkömmlichen Statoranordnungen ein reduziertes Eigengewicht auf. Im Zwischenraum 6 können nach der Montage der Spulenelemente 4 am Statorgehäuse 2 auf vorteilhafte Weise elektrische Leitungsstränge (nicht gezeigt) untergebracht werden, welche elektrisch mit den auf den Spulenelementen 4 vorgesehenen Statorwicklungen 10 verbunden werden können, so dass diese elektrisch nach außen geführt sind.

Aus der Figur 1 lässt sich ferner entnehmen, dass der Zwischenraum 6 mittels der Befestigungsvorsprünge 5 in eine Mehrzahl von ringsegmentartig ausgebildeten Teil-Zwischenräumen 11 unterteilt wird. Somit stehen zur elektrischen Kontaktierung der auf den Spulenelementen 4 angebrachten Statorwicklungen 10 jeweils separate Zwischenräume 11 zur Unterbringung von elektrischen Leitungen zur Verfügung. Je nach Ausgestaltung der radial nach außen abstehenden Befestigungsvorsprünge 5 können die Teil-Zwischenräume 11 unterschiedliche Raumgeometrien aufweisen.

Zusätzlich kann in jedem Befestigungsvorsprung 5 eine sich in axialer Richtung A des Statorgehäuses 2 erstreckende Ausnehmung 21, insbesondere in der Art einer Nut, vorgesehen sein, wie die Figur 2a im Einzelnen erkennen lässt. Dies ermöglicht ein besonders einfaches Einpressen der Befestigungsvorsprünge 5 in das Statorgehäuse 2, denn mittels der Ausnehmungen 21 kann die Kontaktfläche beim Einpressen der Spulenelemente 4 in das Statorgehäuse 2 reduziert und somit der Anpressdruck erhöht werden.

In der Figur 2b ist eine Variante des Spulenelements 4 der Figur 2a gezeigt, gemäß welcher anstelle eines einzigen Befestigungsvorsprungs 5 jeweils zwei in Umfangsrichtung U zueinander versetzt angeordnete Befestigungsvorsprünge 5 vorgesehen sind.

Aus der Darstellung der Figur 4 entnimmt man, dass zwei in dem am Statorgehäuse 2 befestigten Zustand benachbarte Spulenelemente 4 jeweils mittels des radial äußeren Endabschnitts 8 aneinander befestigt sind. Zur Befestigung zweier benachbarter Spulenelemente 4 ist am radial äußeren Endabschnitt 8 jeweils ein in Umfangsrichtung U abstehender Vorsprung 13 (vgl. auch Fig. 2) sowie eine entgegen der Umfangsrichtung U offene und zum Vorsprung 13 komplementäre Ausnehmung 12 vorgesehen. In dem am Statorgehäuse 2 befestigten Zustand greift der Vorsprung 13 eines ersten Spulenelements 4 in die jeweilige Ausnehmung 13 eines in Umfangsrichtung U zum ersten Spulenelement 4 benachbarten zweiten Spulenelements 4 ein. Dies wird aus der Darstellung der Figur 5 deutlich, welche eine vergrößerte Darstellung des in der Figur 4 mit "V" bezeichneten Bereichs zeigt.

Um eine mechanisch möglichst stabile Befestigung zweier benachbarter Spulenelemente 4 aneinander zu erreichen, kann der Vorsprung 13 im Querschnitt der Statoranordnung 1 kreissegmentartig ausgebildet sein. Die jeweilige Ausnehmung 12 ist dabei derart im Wesentlichen, aber nicht vollständig komplementär zum kreissegmentartigen Vorsprung 13 ausgebildet, dass ein jeweiliger in einer Ausnehmung 12 aufgenommener Vorsprung 13 mit seiner Außenfläche 14 nicht vollständig an einer zu dieser Außenfläche 14 komplementären Außenfläche 15 der Ausnehmung 12 anliegt.

Wie in der Figur 5 gezeigt kann durch eine nicht vollständig komplementäre Ausbildung der Oberflächenkonturen von Ausnehmung 12 und Vorsprung 13 zwischen dem Vorsprung 13 und der Ausnehmung 12 ein Zwischenraum 16 zwischen einem Nutengrund 17 der Ausnehmung 12 und dem Vorsprung 13 realisiert werden.

Besonders zweckmäßig kann der Vorsprung 13 wie in der Figur 5 gezeigt im Querschnitt eine kreissegmentartige, insbesondere eine halbkreisartige, Oberflächenkontur 18 mit einem vorbestimmten ersten Krümmungsradius r₁ aufweisen. In diesem Fall weist die Ausnehmung 12 im Querschnitt eine erste kreissegmentartige Oberflächenkontur 19 auf, welches im Nutengrund 17 in eine zweite Oberflächenkontur 20 übergeht, wobei die beiden Oberflächenkonturen jeweils einen zweiten Krümmungsradius r₂ aufweisen, der größer ist als der erste Krümmungsradius r₁ . Auf diese Weise kann der vorangehend erwähnte Zwischenraum 16 zwischen dem Nutengrund 17 der Ausnehmung 12 und dem Vorsprung 13 erzeugt werden. In dem in der Figur 5 gezeigten Beispiel liegt der Vorsprung 13 nur in zwei Bereichen 21a, 21b in der Ausnehmung 12 des benachbarten Spulenelements 14 an, die sich seitlich vom Nutengrund 17 bzw. dem Zwischenraum 16 befinden. Dies ermöglicht eine besonders stabile Befestigung zweier benachbarter Spulenelemente 4 aneinander.

## Patentansprüche

1. Statoranordnung (1) für einen Elektromotor,
- mit einem im Querschnitt ringartig ausgebildeten Statorgehäuse (2),
- mit einer Mehrzahl von im Statorgehäuse (2) benachbart zueinander angeordneten Spulenelementen (4) zur Aufnahme einer jeweiligen Statorwicklung (10),
- wobei die Spulenelemente (4) in Umfangsrichtung (U) des Statorgehäuses (2) benachbart zueinander in diesem angeordnet sind und jeweils in einem im Statorgehäuse (2) montierten Zustand wenigstens einen radial nach außen abstehenden Befestigungsvorsprung (5) aufweisen, mittels welchem sich die Spulenelemente (4) derart radial nach außen am Statorgehäuse (2) abstützen, dass zwischen diesem und den Spulenelementen (4) ein sich in Umfangsrichtung (U) erstreckender Zwischenraum (6) ausgebildet ist,
- wobei zwei in dem am Statorgehäuse (2) befestigten Zustand benachbarte Spulenelemente (4) jeweils mittels ihres radial äußeren Endabschnitts (8) aneinander befestigt sind,
- wobei zur Befestigung zweier benachbarter Spulenelemente (4) am radial äußeren Endabschnitt (8) jeweils ein in Umfangsrichtung (U) abstehender Vorsprung (13) und eine entgegen der Umfangsrichtung (U) offene und zum Vorsprung (13) komplementäre Ausnehmung (12) vorgesehen sind,
- wobei in dem am Statorgehäuse (2) befestigten Zustand der Vorsprung (13) eines ersten Spulenelements (4) in die jeweilige Ausnehmung (12) eines in Umfangsrichtung (U) zum ersten Spulenelement (4) benachbarten zweiten Spulenelements (4) eingreift,
- wobei der Vorsprung (13) im Querschnitt eine kreissegmentartige, insbesondere eine halbkreisartige, Oberflächenkontur (18) mit einem vorbestimmten ersten Krümmungsradius (r₁) aufweist,
**dadurch gekennzeichnet, dass**
- die Ausnehmung (12) im Querschnitt eine erste kreissegmentartige Oberflächenkontur (19) aufweist, welches im Nutengrund (17) in ein zweite kreissegmentartige Oberflächenkontur (20) übergeht, wobei die beiden Oberflächenkonturen (19, 20) jeweils einen zweiten Krümmungsradius (r₂) aufweisen, der größer ist als der erste Krümmungsradius (r₁),
- der Vorsprung (13) nur in zwei Bereichen (21a, 21b) in der Ausnehmung (12) des benachbarten Spulenelements (14) anliegt, die sich seitlich vom Nutengrund (17) befinden.

2. Statoranordnung nach Anspruch 1,
**dadurch gekennzeichnet, dass**
die Spulenelemente (4) im am Statorgehäuse (2) montierten Zustand mittels der radial nach außen abstehenden Befestigungsvorsprünge (5) in das Statorgehäuse (2) eingepresst sind.

3. Statoranordnung nach Anspruch 1 oder 2,
**dadurch gekennzeichnet, dass**
der Zwischenraum (6) mittels der Befestigungsvorsprünge (5) in eine Mehrzahl von ringsegmentartig ausgebildeten Teil-Zwischenräumen (11) unterteilt wird.

4. Statoranordnung nach einem der Ansprüche 1 bis 3,
**dadurch gekennzeichnet, dass**
in jedem Befestigungsvorsprung (5) eine sich in axialer Richtung (A) des Statorgehäuses (2) erstreckende Ausnehmung (21), insbesondere in der Art einer Nut, vorgesehen ist.

5. Statoranordnung nach einem der vorhergehenden Ansprüche,
**dadurch gekennzeichnet, dass**
- jedes Spulenelement (4) einen sich im montierten Zustand entlang der radialen Richtung (R) des Statorgehäuses (2) erstreckenden Hauptabschnitt (7) aufweist, auf welchem eine Statorwicklung (10) angeordnet, insbesondere aufgewickelt, ist,
- der Hauptabschnitt (7) radial außen in einen beidseitig entlang der Umfangsrichtung (U) abstehenden äußeren Endabschnitt (8) und radial innen in einen beidseitig entlang der Umfangsrichtung (U) abstehenden inneren Endabschnitt (9) übergeht.

6. Statoranordnung nach einem der vorhergehenden Ansprüche,
**dadurch gekennzeichnet, dass**
- der am radial äußeren Endabschnitt (8) des jeweiligen Spulenelements (4) vorgesehen Vorsprung (13) im Querschnitt kreissegmentartig ausgebildet ist,
- die jeweilige Ausnehmung (12) derart im Wesentlichen komplementär zum kreissegmentartig Vorsprung (13) ausgebildet ist, dass ein jeweiliger in einer Ausnehmung (12) aufgenommener Vorsprung (13) mit seiner Außenfläche (14) nur bereichsweise an einer zu dieser Außenfläche (14) komplementären Außenfläche (15) der Ausnehmung (12) anliegt.

7. Statoranordnung nach einem der vorhergehenden Ansprüche,
**dadurch gekennzeichnet, dass**
in einem in der Ausnehmung (12) aufgenommenen Zustand des jeweiligen zur Ausnehmung (12) komplementären Vorsprungs (13) wenigstens ein Zwischenraum (16) zwischen einem Nutengrund (17) der Ausnehmung (12) und dem Vorsprung (13) ausgebildet ist.

8. Statoranordnung nach einem der vorhergehenden Ansprüche,

9. Statoranordnung nach einem der vorhergehenden Ansprüche,
**dadurch gekennzeichnet, dass**
die Spulenelemente (4) als Blechstanzteile ausgebildet sind.

10. Elektromotor,
- mit einer Statoranordnung (1) nach einem der vorhergehenden Ansprüche,
- mit einem relativ zur Statoranordnung (1) drehverstellbaren Rotor.

## Claims

1. Stator arrangement (1) for an electric motor,
- having a stator housing (2) which is constructed in an annular manner in cross-section,
- having a plurality of coil elements (4) which are arranged adjacent to each other in the stator housing (2) for receiving a respective stator winding (10),
- wherein the coil elements (4) in the peripheral direction (U) of the stator housing (2) are arranged adjacent to each other in it and in each case in a state mounted in the stator housing (2) have at least one radially outwardly protruding securing projection (5) by means of which the coil elements (4) are supported radially outwardly on the stator housing (2) in such a manner that between this one and the coil elements (4) an intermediate space (6) which extends in the peripheral direction (U) is formed,
- wherein two coil elements (4) which are adjacent in the state secured to the stator housing (2) are secured to each other by means of the radially outer end portion (8) thereof,
- wherein in order to secure two adjacent coil elements (4) to the radially outer end portion (8) a projection (13) which protrudes in the peripheral direction (U) and a recess (12) which is open counter to the peripheral direction (U) and which complements the projection (13) are provided,
- wherein in the state secured to the stator housing (2) the projection (13) of a first coil element (4) engages in the respective recess (12) of a second coil element (4) which is adjacent to the first coil element (4) in the peripheral direction (U),
- wherein the projection (13) has in cross-section a circle-segment-like, in particular semi-circle-like, surface contour (18) with a predetermined first radius of curvature (r₁),
**characterised in that**
- the recess (12) has in cross-section a first circle-segment-like surface contour (19) which merges in the groove base (17) into a second circle-segment-like surface contour (20), wherein the two surface contours (19, 20) each have a second radius of curvature (r₂) which is greater than the first radius of curvature (r₁),
- the projection (13) is in abutment only in two regions (21a, 21b) in the recess (12) of the adjacent coil element (14) which are located to the side of the groove base (17).

2. Stator arrangement according to claim 1,
**characterised in that**
the coil elements (4) in the state mounted on the stator housing (2) are pressed into the stator housing (2) by means of the radially outwardly protruding securing projections (5).

3. Stator arrangement according to claim 1 or 2,
**characterised in that**
the intermediate space (6) is sub-divided by means of the securing projections (5) into a plurality of ring-segment-like intermediate part-spaces (11).

4. Stator arrangement according to any one of claims 1 to 3,
**characterised in that**
in each securing projection (5) a recess (21) which extends in an axial direction (A) of the stator housing (2), in particular in the manner of a groove, is provided.

5. Stator arrangement according to any one of the preceding claims,
**characterised in that**
- each coil element (4) has a main portion (7) which extends in the assembled state in the radial direction (R) of the stator housing (2) and on which a stator winding (10) is arranged, in particular wound,
- the main portion (7) merges radially outwards into an outer end portion (8) which protrudes at both sides in the peripheral direction (U) and radially inwards into an inner end portion (9) which protrudes at both sides in the peripheral direction (U).

6. Stator arrangement (1) according to any one of the preceding claims, **characterised in that**
- the projection (13) which is provided at the radially outer end portion (8) of the respective coil element (4) is constructed in a circle-segment-like manner in cross-section,
- the respective recess (12) is constructed in such a substantially complementary manner to the circle-segment-like projection (13) that a respective projection (13) which is received in a recess (12) is in abutment with the outer face (14) thereof only partially against an outer face (15) of the recess (12) which complements this outer face (14).

7. Stator arrangement according to any one of the preceding claims,
**characterised in that**
in a state of the projection (13) which complements the recess (12) being received in the recess (12) at least one intermediate space (16) is formed between a groove base (17) of the recess (12) and the projection (13).

8. Stator arrangement according to any one of the preceding claims,

9. Stator arrangement according to any one of the preceding claims,
**characterised in that**
the coil elements (4) are constructed as punched metal sheet components.

10. Electric motor
- having a stator arrangement (1) according to any one of the preceding claims,
- having a rotor which can be rotatably adjusted relative to the stator arrangement (1).

## Revendications

1. Agencement de stator (1) pour un moteur électrique,
- avec un boîtier de stator (2) réalisé sous forme d'anneau en section transversale,
- avec une pluralité d'éléments de bobine (4) agencés de manière adjacente les uns aux autres dans le boîtier de stator (2) pour la réception d'un enroulement de stator (10) respectif,
- dans lequel les éléments de bobine (4) sont agencés dans la direction périphérique (U) du boîtier de stator (2) de manière adjacente les uns aux autres dans celui-ci et présentent respectivement dans un état monté dans le boîtier de stator (2) au moins une saillie de fixation (5) dépassant radialement vers l'extérieur, au moyen de laquelle les éléments de bobine (4) s'appuient radialement vers l'extérieur contre le boîtier de stator (2) de telle manière qu'entre celui-ci et les éléments de bobine (4) un espace intermédiaire (6) s'étendant dans la direction périphérique (U) soit réalisé,
- dans lequel deux éléments de bobine (4) adjacents dans l'état fixé au boîtier de stator (2) sont respectivement fixés l'un à l'autre au moyen de leur section d'extrémité (8) radialement extérieure,
- dans lequel, pour la fixation de deux éléments de bobine (4) adjacents à la section d'extrémité (8) radialement extérieure, respectivement une saillie (13) dépassant dans la direction périphérique (U) et un évidement (12) complémentaire à la saillie (13) et ouvert dans le sens inverse à la direction périphérique (U) sont prévus,
- dans lequel, dans l'état fixé au boîtier de stator (2), la saillie (13) d'un premier élément de bobine (4) se met en prise avec l'évidement (12) respectif d'un second élément de bobine (4) adjacent dans la direction périphérique (U) au premier élément de bobine (4),
- dans lequel la saillie (13) présente en section transversale un contour de surface (18) sous forme de segment circulaire, en particulier semi-circulaire, avec un premier rayon de courbure (r₁) prédéterminé,
**caractérisé en ce que**
- l'évidement (12) présente en section transversale un premier contour de surface (19) sous forme de segment circulaire qui passe dans le fond de rainure (17) en un second contour de surface (20) sous forme de segment circulaire, dans lequel les deux contours de surface (19, 20) présentent respectivement un second rayon de courbure (r₂) qui est supérieur au premier rayon de courbure (r₁),
- la saillie (13) repose seulement dans deux zones (21a, 21b) dans l'évidement (12) de l'élément de bobine (14) adjacent qui se trouvent latéralement du fond de rainure (17).

2. Agencement de stator selon la revendication 1,
**caractérisé en ce que**
les éléments de bobine (4) sont enfoncés, à l'état monté au niveau du boîtier de stator (2), dans le boîtier de stator (2) au moyen des saillies de fixation (5) dépassant radialement vers l'extérieur.

3. Agencement de stator selon la revendication 1 ou 2,
**caractérisé en ce que**
l'espace intermédiaire (6) est divisé au moyen des saillies de fixation (5) en une pluralité d'espaces intermédiaires partiels (11) réalisés sous forme de segment annulaire.

4. Agencement de stator selon l'une quelconque des revendications 1 à 3,
**caractérisé en ce que**
dans chaque saillie de fixation (5) est prévu un évidement (21) s'étendant dans la direction axiale (A) du boîtier de stator (2), en particulier sous forme de rainure.

5. Agencement de stator selon l'une quelconque des revendications précédentes,
**caractérisé en ce que**
- chaque élément de bobine (4) présente une section principale (7) s'étendant à l'état monté le long de la direction radiale (R) du boîtier de stator (2), sur laquelle un enroulement de stator (10) est agencé, en particulier enroulé,
- la section principale (7) passe radialement vers l'extérieur en une section d'extrémité (8) extérieure dépassant de part et d'autre le long de la direction périphérique (U) et radialement vers l'intérieur en une section d'extrémité (9) intérieure dépassant de part et d'autre le long de la direction périphérique (U).

6. Agencement de stator selon l'une quelconque des revendications précédentes,
**caractérisé en ce que**
- la saillie (13) prévue au niveau de la section d'extrémité (8) radialement extérieure de l'élément de bobine (4) respectif est réalisée sous forme de segment circulaire en section transversale,
- l'évidement (12) respectif est réalisé de façon sensiblement complémentaire à la saillie (13) sous forme de segment circulaire de telle manière qu'une saillie (13) respective reçue dans un évidement (12) repose avec sa surface extérieure (14) seulement par endroits contre une surface extérieure (15), complémentaire à cette surface extérieure (14), de l'évidement (12).

7. Agencement de stator selon l'une quelconque des revendications précédentes,
**caractérisé en ce que**
dans un état reçu dans l'évidement (12) de la saillie (13) respective complémentaire à l'évidement (12), au moins un espace intermédiaire (16) est réalisé entre un fond de rainure (17) de l'évidement (12) et la saillie (13).

8. Agencement de stator selon l'une quelconque des revendications précédentes,

9. Agencement de stator selon l'une quelconque des revendications précédentes,
**caractérisé en ce que**
les éléments de bobine (4) sont réalisés en tant que pièces en tôle découpées.

10. Moteur électrique,
- avec un agencement de stator (1) selon l'une quelconque des revendications précédentes,
- avec un rotor réglable en rotation par rapport à l'agencement de stator (1).
